Europäisches Patentamt

European Patent Office

Office européen des brevets

(11) Publication number: **0 426 936 A1**

## EUROPEAN PATENT APPLICATION

(21) Application number: 90108264.4

(51) Int. Cl.⁵: **A23L 1/311**

(22) Date of filing: 30.04.90

(30) Priority: 10.11.89 JP 293054/89
10.11.89 JP 293055/89

(43) Date of publication of application:
**15.05.91 Bulletin 91/20**

(84) Designated Contracting States:
**DE FR GB**

(71) Applicant: **IWATANI SANGYO KABUSHIKI KAISHA**
**4-8 Hommachi 3-chome, Chuo-ku**
**Tokyo(JP)**

(72) Inventor: **Inoue, Mitsuyori, c/o Iwatani Sangyo Kabushiki K.**
**Honsha, 7-1 Hachobori 2-chome**
**Chuo-ku, Tokyo(JP)**

(74) Representative: **Couchman, Jonathan Hugh et al**
**Bowles Horton Felden House Dower Mews**
**High Street**
**Berkhamsted, Herts. HP4 2BL(GB)**

(54) **Food product comprising powder or essence of soft-shelled turtles and a therapeutic herb.**

(57) An enriched nutritious food product or dietary supplement having a main component comprising a powder of soft-shelled turtles is made by cleaning living soft-shelled turtles; instantaneously freezing the living cleaned soft-shelled turtles; crushing the frozen soft-shelled turtles into a powder; and mixing a therapeutic herb component with the powder of soft-shelled turtles or with an essence provided by further refining and filtering the powder. The powder of soft-shelled turtles can also be enclosed in gelatine capsules, after having been admixed with wheat germ oil.

EP 0 426 936 A1

# FOOD PRODUCT COMPRISING POWDER OR ESSENCE OF SOFT-SHELLED TURTLES AND A THERAPEUTIC HERB

## BACKGROUND OF THE INVENTION

### 1. Field of the Invention

The present invention relates to an enriched nutritious product manufactured by mixing a crude drug (herb) with powder of soft-shelled turtles made by instantaneously freezing and crushing the living soft-shelled turtles or with refined essence thereof.

### 2. Prior Art

Since ancient times, in every country in the world, soft-shelled turtles have been served as food of the highest quality, as superior food providing a healthy source of energy and promoting physical strength and beauty and further as foodstuffs for patients. However, they are almost always consumed in top quality restaurants because such dishes require considerable cooking skill and are expensive. Therefore, this useful food material is not now used generally, nor is it readily available.

Accordingly, for solving such a drawback and enabling everybody to eat the soft-shelled turtles readily, the inventor of the present invention has accomplished the inventions shown in, for example Japanese Patent No.1109438 (Publication No.1982-1980), Japanese Patent No. 1427020 (Publication No. 1987-31896) U.S. Pat. No.4426398 and U.K. Pat. No.2121667 and put the foods on the market, which have been favourably commented upon.

## SUMMARY OF THE INVENTION

The present invention is intended to improve the above-mentioned inventions and has a main feature that an enriched nutritious food product or dietary supplement comprising powder made from soft-shelled turtles is mixed with a crude drug. The term "crude drug" includes herbs or plants having beneficial or therapeutic properties, or extracts thereof. As such crude drugs there may be mentioned, for example, Korean ginseng, German chamomile, Chinese matrimony vine and so on which have been known from ancient times in China and whose good medicinal benefits without any side effect as a superior healthy source of energy have been acknowledged throughout the world. It is very effective as nutritious food or nutritious drink which contributes effectively to promote physical strength and fatigue recovery by multiplication of the nutritious virtue of the powder of the softshelled turtles and the benefit of various kinds of crude drug components.

The present invention provides an enriched nutritious food product or dietary supplement manufactured by mixing a crude drug component with powder of soft-shelled turtles which is provided by rapidly freezing and crushing the cleaned living turtles by the same means as those of the aforementioned inventions, in which every living turtle has both the interior and the exterior of the body cleaned by having not been fed for at least two days prior to the cleaning process. The food product may be formulated to be readily eaten any time and anywhere as it is or, for example, it may be encapsulated. As used herein, the term "food" encompasses substance in liquid (i.e. beverage) form.

Further, the present invention provides an enriched nutritious food product or dietary supplement manufactured by mixing the crude drug component with an essence of soft-shelled turtles which is provided by filtering and refining a raw material liquefied from the powder of the soft-shelled turtles by means of amino-acid dissolution, employing an enzyme. This liquid product may be used (normally in a small quantity) as a nutritious drink as it is or, for example, it may be diluted with water or liquor or used as a kind of seasoning to be incorporated into a soup or the like.

## DETAILED DESCRIPTION OF THE PREFERRED EMBODIMENTS

Now one example of the method of manufacture of powder of soft-shelled turtles used as a main component of enriched nutritious food products according to the present invention and one embodiment of the enriched nutritious food product will be explained hereinafter.

First of all, after cleaning the entire living bodies, namely the interiors as well as the exteriors of the bodies, of the soft-shelled turtles without feeding them for at least 2 days, these living turtles are instantaneously frozen. Immediately after freezing, the bodies are crushed into small masses having a size of nearly 1 cm by means of a coarse crusher.

Then, the masses of soft-shelled turtles are sterilized by a high-pressure flash pasteurization and dried by an ordinary freeze-drying method so that the water content is reduced below 4 percent.

The dried masses are then instantaneously frozen by immersing them in liquid nitrogen at a temperature of -196 degrees centigrade, and after that the masses, including all the components such as bones, a shell, meat and so on, are quickly ground down to a minute powder having a grade equal to or smaller than 200 mesh in an atmosphere of nitrogen gas at a temperature of not higher than -50 degrees centigrade.

The minute powder formed in that way is a beautiful dark brown colour and is a high quality, bacteria free product having a flavour appropriate to soft-shelled turtles.

As noted above, the powder of soft-shelled turtles formed according to the above-mentioned method contains various useful nutritious components which are not oxidized, and also contains gelatine and fat with no loss by effusion. These components are held in minute powder form having a grade equal to or smaller than 200 mesh, and have nutrients, tastes and flavours appropriate to soft-shelled turtles. The minute powder is quite convenient to market, and is very useful raw material for various processed foods.

That is, the minute powder obtained according to the above-mentioned method of the manufacture contains many high quality proteins, amino acids and fats the same as that of a plant and containing much topical oleic acid, and various kinds of polyunsaturated fatty acids, and further contains various kinds of minerals and vitamins.

The general analytical value of the aforementioned powder of soft-shelled turtles is shown in the following table 1.

TABLE 1

|  | % by weight |
|---|---|
| water (drying at normal pressure) | 2.8% |
| protein (coefficient 6.25) | 53.3% |
| fat (Soxhelt extracting method) | 24.9% |
| fibre | 0.2% |
| mineral | 16.6% |
| sugar | 2.2% |
| calories per 100g | 447 cal |

Especially, the protein contains many essential amino acids such as lysine, phenylalanine, leucine, isoleucine, methionine, valine, threonine and tryptophan, many other amino acids such as tyrosine, alanine, glycine, proline, glutamic acid, serine, asparaginic acid and cystine, many vitamins such as retinol, vitamin $B_1$, vitamin $B_2$, vitamin $B_6$, vitamin $B_{12}$, vitamin E, folic acid, niacin, pantothenic acid, biotin, inositol and vitamin $D_3$ and minerals such as calcium, potassium, iron, zinc and so on.

Thus, the powder made from soft-shelled turtles contains many more kinds of nutritious components than those found in ordinary medicines for health.

A feature of the present invention is the provision of a further improved enriched nutritious food product including a mixture of the powder made from soft-shelled turtles as mentioned above and the components of crude drugs and optionally a gelatine capsule having a size of typically 2-6mm for enclosing a dose of the mixture.

One typical embodiment thereof will be explained. The enriched nutritious food product is formed by the following procedure. Firstly, the fine powder of soft-shelled turtles constituting between 90 and 50% by weight of the resultant mixture is mixed with the crude drug component such as an essence of Korean ginseng, an essence of Chinese matrimony vine and so on constituting between 10 and 50% by weight of the resultant mixture, then the resultant mixture is mixed in an adequate amount of a wheat germ oil by stirring so as to provide the final mixture, and the final mixture is contained within the gelatine capsule having a size of 2-6mm.

Herein, the reason for mixing the resultant mixture into the wheat germ oil is to facilitate the containment of the mixture within the capsule. In the case that a hard gelatine capsule is used, it is unnecessary to use the wheat germ oil. Therefore, the presence of the wheat germ oil is not so essential to the constitution of the present invention.

The normal diameter of 2-6mm as a size of the capsule is meaningful for enabling the encapsulated food product to be readily swallowed without the aid of water at anytime and anywhere regardless of age or sex.

Incidentally, as some examples of the crude drug to be employed in the present invention, the following known crude drugs can be mentioned: Korean ginseng, German chamomile, Chinese matrimony vine, Panax notoginseng, Japanese orange peel, Caryophylli flos, Choerospondias axillarris, Margarite pearl, Crataegus cuneata, Platycodon glandiflorum A. DC., safflower, cinnamon, Polygonatum kingianum collet kemsl, Amanum villosumlour and so on.

Next, one example of the method of manufacture of the essence of soft-shelled turtles as a main component of the enriched nutritious food product according to the present invention and another embodiment of the enriched nutritious food product associated therewith will be explained.

After cleaning the entire living bodies, namely the interiors and the exteriors of the living bodies of soft-shelled turtles without feeding them for at least 2 days, the living bodies are immersed in liquid nitrogen having a temperature of -196 degrees centigrade so as to be instantaneously frozen. Immediately after this freezing the frozen bodies are crushed by means of a crusher within the nitrogen gas atmosphere.

Then, the small masses made from soft-shelled turtles are sterilized at 110 degrees centigrade for about 5 minutes by high-pressure flash pasteurization. The pasteurized small masses have a water content of about 70 percent by weight and comprise dark brown coarse solid bodies of the mixture of bone, shell and meat having a flavour proper to soft-shelled turtles.

These small masses of soft-shelled turtles contain many high quality proteins, amino acids and polyunsaturated fatty acids the same as that of a plant and further contain various kinds of useful minerals and vitamins to become superior nutrients.

After the pasteurization, in order to change the small masses of soft-shelled turtles to the essence which can easily be taken into the human body as a nutritious food the following enzymatic dissolution (enzymolysis) process is applied to the small masses.

That is, the proteins composing the component of soft-shelled turtles are dissolved into amino acids by adding water and a hydrolytic enzyme, for example trypsin, as an adequate catalyst into the small masses of soft-shelled turtles. The peptide linkages of the protein are broken up so as to provide various kinds of amino acids such as glycine, glutamic acid, proline, aspartic acid and the like as being the structural components thereof. These components are dissolved into a solution as a coarse nutritious solution.

Since the aforementioned solution contains various kinds of dissolved substances, it is deodorized by means of activated charcoal or clay filtration. Further filtration and refining processes are applied to the solution so as to separate it into a refined nutritious solution containing amino acids and residual components such as fat, mineral, sugar and so on. The solution without any residual substance is provided as the liquid essence of soft-shelled turtles as it is or in a state condensed under vacuum.

The liquid essence made from soft-shelled turtles in that way preserves essential nutrient and flavour proper to soft-shelled turtle just as it is.

The present invention is intended to provide further improved enriched nutritious food product which is made by mixing the components of the crude drug with the aforementioned essence of soft-shelled turtles in the same way as in the former embodiment.

One example of the food product will be explained. Firstly, the essence of soft-shelled turtles is mixed with the components of the crude drugs such as the essence of Korean ginseng, the essence of Chinese matrimony vine and so on in the weight ratio of 1 : 0.3-5, and then water is added so that the total volume becomes 50ml. The liquid food product made in that way is filled in a bottle or a can container and heated for pasteurization to obtain nutritious drink.

This liquid food product can also be used by being mixed in liquor and soup in a proper quantity as well as utilized as an additional food for seasoning and flavouring.

## Claims

1. An enriched nutritious food product or dietary supplement having a main component comprising a powder of soft-shelled turtles made by:
cleaning living soft-shelled turtles;

EP 0 426 936 A1

instantaneously freezing the living cleaned soft-shelled turtles;

crushing the frozen soft-shelled turtles into a powder;

and mixing a crude drug (herb) component with the powder of soft-shelled turtles or with an essence provided by further refining and filtering the powder.

2. An enriched nutritious food product or dietary supplement having a main component comprising a powder of soft-shelled turtles made by:

cleaning living soft-shelled turtles;

instantaneously freezing the living cleaned soft-shelled turtles;

coarsely crushing the entire frozen soft-shelled turtles;

pasteurizing and drying the coarsely crushed soft-shelled turtles;

instantaneously freezing the crushed, pasteurized and dried soft-shelled turtles by immersing the crushed, pasteurized and dried soft-shelled turtles in liquid nitrogen;

grinding the coarsely crushed frozen soft-shelled turtles into a powder in an atmosphere of nitrogen gas at a temperature at least as low as -50 degrees centigrade;

mixing a crude drug (herb) component in the powder of soft-shelled turtles; and, optionally,

putting the powder into a capsule.

3. An enriched nutritious food product or dietary supplement having a main component comprising a powder of soft-shelled turtles as set forth in claim 1 or 2, wherein said powder of soft-shelled turtles is put in a gelatine capsule having a diameter of 2-6mm.

4. An enriched nutritious food product or dietary supplement according to any one of the preceding claims, wherein the powder of soft-shelled turtles constitutes between 90 and 50% by weight of the mixture of soft-shelled turtle powder and crude drug component and the crude drug component constitutes between 10 and 50% by weight of the mixture.

5. An enriched nutritious food product or dietary supplement having a main component comprising an essence of soft-shelled turtles as set forth in claim 1, wherein, in the manufacture of the food product,

the living cleaned soft-shelled turtles are frozen by immersing them in liquid nitrogen;

the soft-shelled turtles are pasteurized after crushing; and

the crushed soft-shelled turtles are refined and filtered by being contacted with an enzyme to hydrolyse the protein whereby the amino acids are dissolved so as to provide a liquid substance and by further refining and filtering the liquid substance to provide the essence of soft-shelled turtles.

6. An enriched nutritious food product or dietary supplement having a main component comprising an essence of soft-shelled turtles as set forth in claim 1 or 5, wherein the crude drug (herb) component is mixed with the essence of soft-shelled turtles in a weight ratio of 1 : 0.3-5.

5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | US-A-4 426 398 (T. KOKURA)<br>* Whole document * | 1-3 | A 23 L 1/311 |
| Y | WPIL/DERWENT, AN = 83-45397k[19], Derwent Publications Ltd, London, GB;<br>& JP-A-58 055 424 (SATO K.) 01-04-1983<br>* Abstract * | 1-3,5 | |
| Y | PATENT ABSTRACTS OF JAPAN;<br>& JP-A-59 063 168 (IWATANI SANGYO) 10-04-1984<br>* Abstract * | 1,5 | |
| A | PATENT ABSTRACTS OF JAPAN;<br>& JP-A-58 138 378 (ICHITAROU SHIOMI) 17-08-1983 | | |

|  |
|---|
| **TECHNICAL FIELDS SEARCHED (Int. Cl.5)** |
| A 23 L |

The present search report has been drawn up for all claims

| Place of search | Date of completion of search | Examiner |
|---|---|---|
| The Hague | 06 February 91 | SANTOS Y DIAZ A.I. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document